# EUROPÄISCHE PATENTSCHRIFT

(11) **EP 0 992 717 B1**
(45) Veröffentlichungstag und Bekanntmachung des Hinweises auf die Patenterteilung: **14.07.2004**
(21) Anmeldenummer: 99118953.1
(22) Anmeldetag: 27.09.1999
(51) Int. Cl.: F16J 15/06

(54) **Flachdichtungsring**
Flat gasket
Anneau d'étanchéité plat

(30) Priorität: 09.10.1998 DE 19846475
(43) Veröffentlichungstag der Anmeldung: 12.04.2000
(73) Patentinhaber: Georg Fischer Rohrleitungssysteme AG, 8201 Schaffhausen (CH)
(72) Erfinder: Lemon, Barry, 8234 Stetten (CH)
(74) Vertreter: Weiss, Wolfgang, Dr.

(56) Entgegenhaltungen:
- DE-U- 1 762 329
- DE-U- 9 405 913
- US-A- 5 359 148
- US-A- 5 472 214

## Beschreibung

Die vorliegende Erfindung betrifft einen Flachdichtungsring, insbesondere zur Anordnung zwischen zwei Flanschadaptern in Rohrleitungssystemen nach dem Oberbegriff des 1.Anspruchs.

### Stand der Technik

Bei der Verlegung von Rohrleitungen sind Uebergangsverbindungen notwendig. Diese erfolgen in der Regel über Formstücke, die mit einem Flanschadapter ausgerüstet sind. Je ein Flansch wird über das zu verbindende Formstück geschoben bis dieser an einem sogenannten Vorschweissbund anliegt. Daneben existieren auch Formstücke mit integriertem Flansch. Die Dichtungsflächen der Flanschadapter der zwei miteinander zu verbindenden Formstücke werden unter Zwischenschaltung eines Flachdichtungsringes miteinander in Anlage gebracht. Mittels mehreren Schraubverbindungen werden die Flansche miteinander verbunden, um dadurch den für die fluiddichte Verbindung erforderlichen Anpressdruck auf die zwischen den Dichtflächen der Flanschadapter liegende Dichtung zu erzeugen. Für Dichtungsflächen ohne Nut kommen hierbei Flachdichtungsringe zum Einsatz.

Ein Flachdichtungsring muss in der Regel so ausgebildet sein, dass er mindestens den gesamten Querschnitt der Dichtungsfläche des Flanschadapters abdeckt, d.h. vom Innendurchmesser bis zum Aussendurchmesser des Flanschadapters reicht. Damit sollte eine fluiddichte Verbindung von zwei aneinanderliegenden Formteilen mit zwischengeordneter Dichtung gewährleistet sein. Da der Flansch den Dichtungsring umgibt, ist dieser schlecht zu positionieren und durch ungenaues Zentrieren sowie durch Verrutschen bei der Montage kann es vorkommen, dass der Dichtungsring nicht mehr den Querschnitt der Dichtflache abdeckt. Das führt zu unterschiedlichen Flächenpressdrücken im Dichtungsbereich, was wiederum zur Leckage führen kann. Häufig sind deshalb etwa gemäss der Patenschrift US 5,472,214, mit Oeffnungen versehene Ansätze an Dichtungsringen angebracht, durch welche die Schrauben oder Montagebolzen der Flanschverbindung geführt werden und dadurch den Dichtungsring bezüglich des Flanschringes positionieren. Hierbei sind Grösse der Flanschschrauben, Lochkreisdurchmesser sowie Innen- und Aussendurchmesser von Formteil, Flanschadapter und Flansch und weitere Parameter durch verschiedene Normen festgelegt, welche mit Ausnahme des Innendurchmessers des Formteils untereinander häufig nicht kompatibel sind.

Aus der DE 17 62 329 U ist ein elastischer Flachdichtungsring bekannt, der als Dichtung in einer Flanschverbindung zwischen zwei Rohrleitungsenden angeordnet wird. Zur einfacheren Handhabung bei der Montage der Flanschverbindung weist der Dichtungsring am Aussenumfang in axialer Richtung zeigenden Lippen auf, die in radialer Richtung federnd ausgebildet sind und die den Aussendurchmesser des Rohrleitungsendes formschlüssig umgreifen.

Insbesondere bei Anwendungen in hochreinen Rohrleitungssystemen ist eine genauere Positionierung von Flachdichtungsringen erforderlich, da ansonsten bereits kleinste Spalten und Ritzen im Bereich des Uebergangs Rohr - Dichtungsring unerwünschte Totvolumen darstellen. Ein solcher Uebergang muss hierbei formschlüssig und glatt sein, da unebene Uebergange Turbulenzen im fliessenden Medium hervorrufen, welche strömungsdynamische Totvolumen aufweisen können.

### Darstellung der Erfindung

Ausgehend von diesem Stand der Technik stellt sich die vorliegende Erfindung die Aufgabe, einen Flachdichtungsring vorzuschlagen, der in einer vorbestimmten Position leicht fixierbar ist und für verschiedene Normen geeignet ist. Er sollte auch derart geformt und gefertigt sein, dass er, nach Aufbringen des erforderlichen Anpressdruckes, eine formschlüssig Verbindung erzielt wird, welche eine glatte Oberfläche und keine Totvolumina gegenüber dem Medium im Innern des Rohrsystems aufweist.Eine weitere Aufgabe der Erfindung ist es zu ermöglichen, daβ der Flachdichtungsring für Verbindungen mit Formteilen mit gösseren Aussendurchmessern der Dichtfläche des Flanschadapters verwendet wird.

Diese Aufgabe wird durch die Merkmale des Anspruches 1 gelöst. Weitere vorteilhafte Ausgestaltungen gehen aus den abhängigen Ansprüchen hervor.

Der erfindungsgemässe Flachdichtungsring zeichnet sich dadurch aus, dass er selbst-zentrierende Konstruktionselemente aufweist. Durch eine am äusseren Durchmesser des Flachdichtungsrings beidseitig konzentrisch angebrachte Lippe kann der Flachdichtungsring genau über die Fläche eines genormten ANSI- Sygef-Flansch aufgebracht werden. Diese Lippe kann abgetrennt werden, um den Flachdichtungsring in ISO/DIN-Sygef-Flanschen mit grösserem Durchmessern als solche der ANSI-Norm zu positionieren.

Hierzu befindet sich in relativ kurzen Abschnitt eines Kreissegmentes eine zweite Lippenstruktur, welche auf einem grösseren Radius, der ISO-Norm entsprechend, angeordnet ist. Zusätzliches Abtrennen dieser Lippenstruktur erlaubt den Einsatz des Flachdichtungsringes als ganz gewöhnlichen Flachdichtungsring, welcher dann jedoch zentriert werden muss.

Im Bereich der zweiten Lippenstruktur ist in einem seitlichen Ansatz eine langlochförmigen Aussparung angeordnet. Hierdurch kann der Flachdichtungsring durch einen Montagebolzen oder Schraube während des Einbaus gehalten werden und somit ein Herausfallen verhindert werden.

### Kurze Beschreibung der Zeichnungen

Anhand der beiliegenden Figuren wird ein bevorzugtes Ausführungsbeispiel der Erfindung näher erläutert.
Es zeigt:
- Fig. 1 eine perspektivisch Ansicht des Zusammenbaues von Flachdichtungsring, Formteil und Flansch gemäss der ANSI-Norm
- Fig. 2 eine perspektivisch Ansicht des Zusammenbaues von Flachdichtungsring, Formteil und Flansch gemäss der ISO-Norm
- Fig. 3 eine Aufsicht auf den Flachdichtungsring
- Fig. 4 einen Längsschnitt durch den Flachdichtungsring
- Fig. 5 eine perspektivische Ansicht eines ¾ Schnittes des Flachdichtungsringes für die Verwendung gemäss der ANSI-Norm
- Fig. 6 eine perspektivische Ansicht eines ¾ Schnittes des Flachdichtungsringes für die Verwendung gemäss der ISO-Norm
- Fig. 7 eine perspektivische Ansicht eines ¾ Schnittes des Flachdichtungsringes für die Verwendung gemäss der JIS oder sonstiger Normen

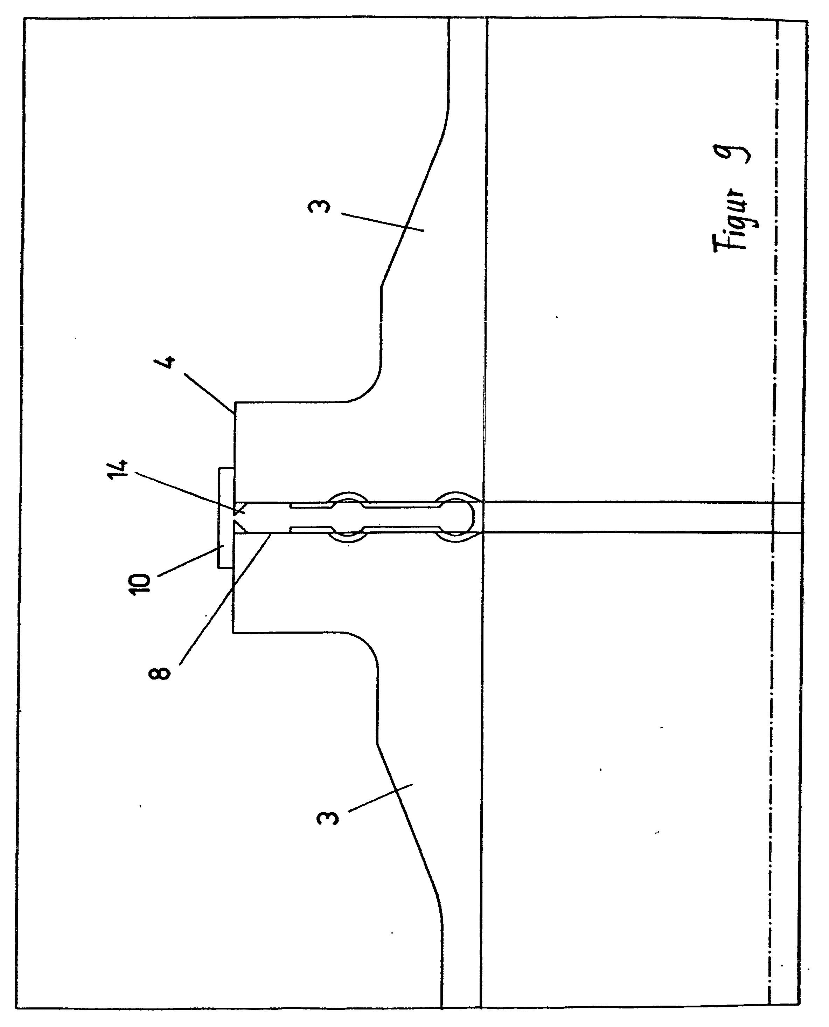

- Fig. 8 eine Ausschnittsvergrösserung des Längsschnittes aus Figur 4
- Fig. 9 den eingebauten und zusammengedrückten Flachdichtungsring

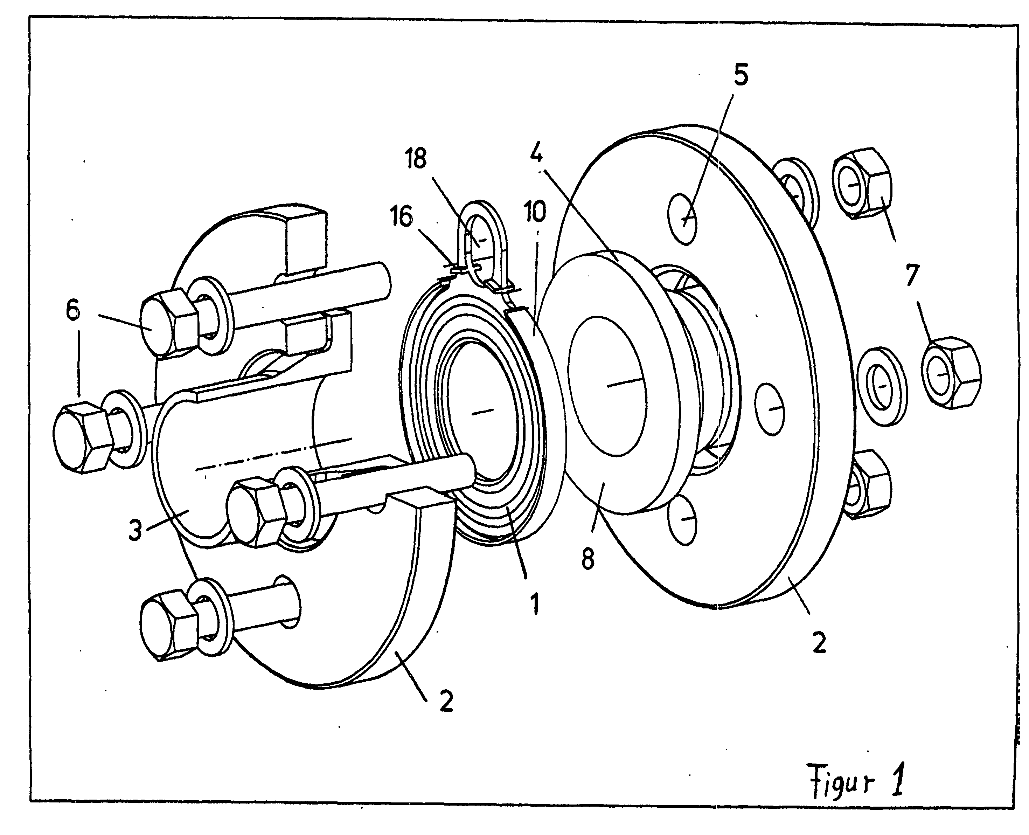

Figur 1 zeigt in einer perspektivischen Darstellung den Einbau des Flachdichtungsringes 1 zwischen zwei Flanschadaptern gemäss der ANSI-Norm. Jeweils über ein mit einem Bund 4 versehenes Formteil 3 ist ein Flansch 2 (mit einem kleinen Spiel) geschoben, welcher mit mehreren symmetrisch angeordneten Oeffnungen 5 zur Aufnahme von Schraubverbindungen 6 versehen ist. Durch jeweils gegenüber liegende Oeffnungen 4 der Flansche 2 können Schrauben 6 hindurchgeführt werden, und durch Anziehen der zugehörigen Muttern 7 kann der erforderliche Anpressdruck aufgebracht werden. Hierbei wird der sich zwischen den Dichtflächen 8 der Bunde 4 befindliche Flachdichtungsring 1 zusammengepresst. Der Flachdichtungsring wird durch eine der Lippe 10, welche an dem Aussendurchmesser des Bundes 4 anliegt, gegenüber diesem positioniert. Da wie in Figur 1 dargestellt der Flansch 2 mit einem Spiel über das Formteil 3 geschoben wird, ergäben sich Ungenauigkeiten in der Positionierung zusätzlich zu denen, welche von Toleranzen der Oeffnungen 5 und Schrauben 6 oder Bolzen- Flanschverbindung herrühren.

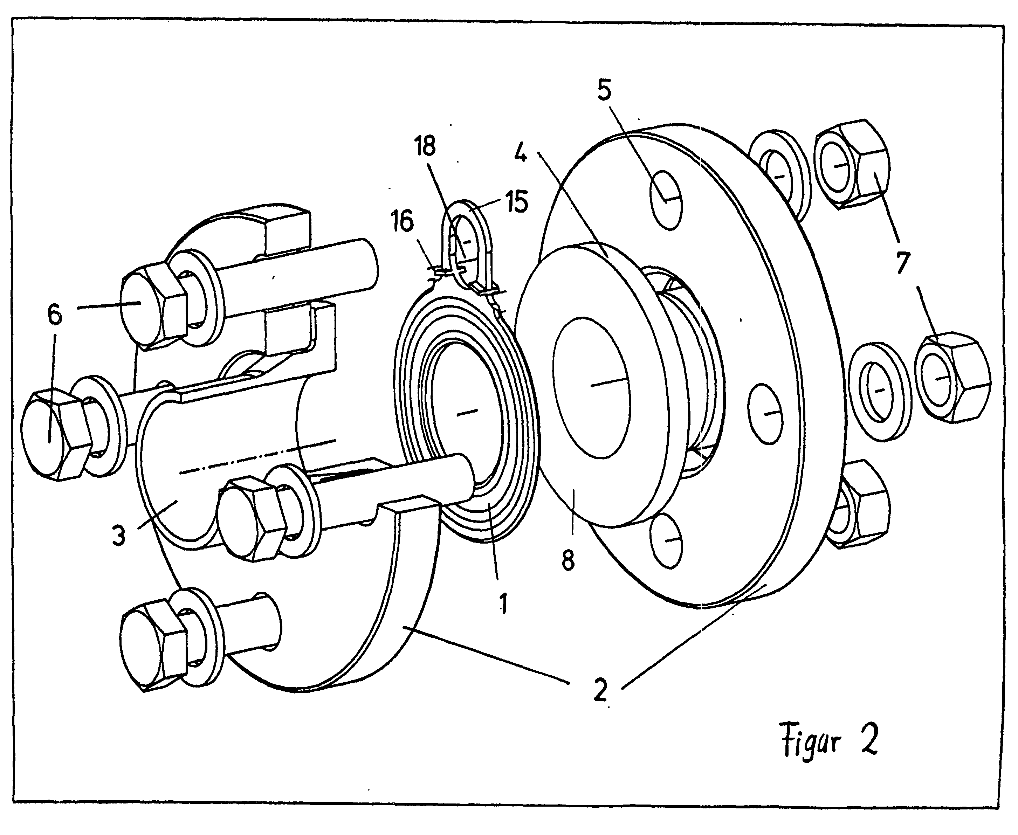

Figur 2 zeigt in einer perspektivischen Darstellung den Einbau des Flachdichtungsringes 1 zwischen zwei Flanschadaptern gemäss der ISO-Norm. Dieser unterscheidet sich von Figur 1, dass die dort gezeigte Lippe 10 abgetrennt ist. Der Flachdichtungsring 1 wird nun durch Lippen 16, welche an dem Aussendurchmesser des Bundes 4 anliegen, gegenüber diesem positioniert.

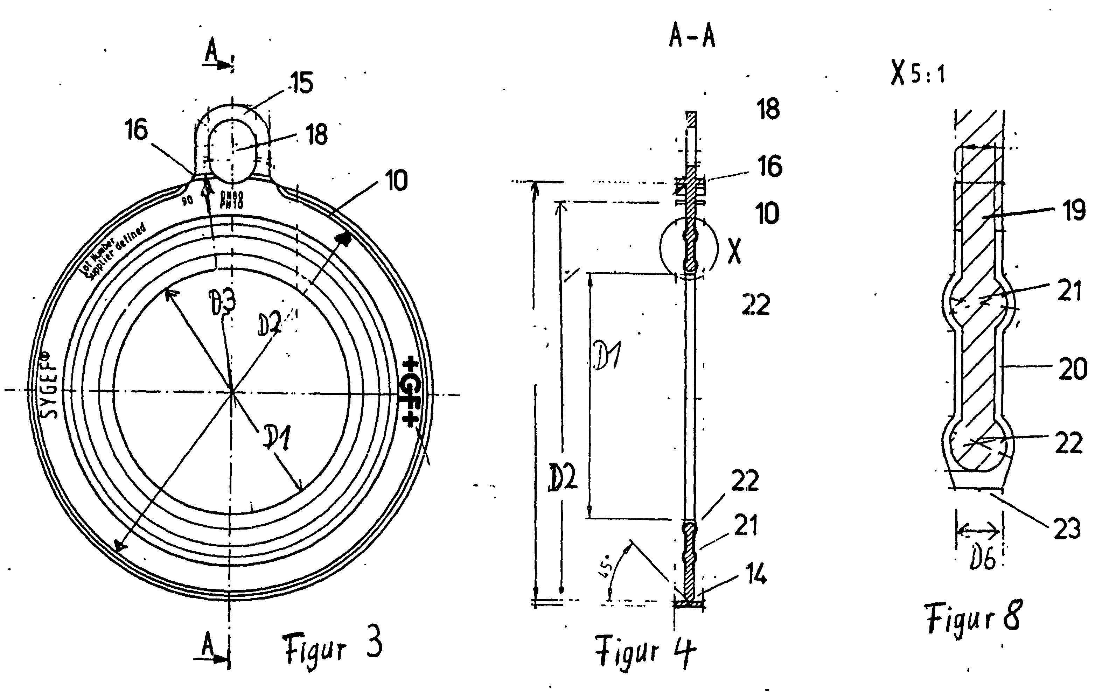

Die Figur 3 zeigt in Aufsicht und Figur 4 im Längsschnitt, einen Flachdichtungsring 1, der einen Innendurchmesser D1 aufweist und den inneren Umfang des Flachdichtungsringes 1 bezeichnet. D1 definiert im wesentlichen die Durchflussöffnung eines Rohrleitungssystems. Der Aussendurchmesser D2 begrenzt den Aussenumfang des Flachdichtungsringes 1. Die sich daran nach aussen anschliessende, nahezu beidseitig vollständig umlaufende Lippe 10 dient der Zentrierung des Flachdichtungsringes gegenüber einem Flanschadapter 2 der ANSI-Norm, Durch geeignete Wahl von D2 liegt die Lippe 10 beim Einbau des Flachdichtungsringes 1 genau an der Aussenfläche des Bunds 4 des ANSI-Flanschadapters an, wodurch eine höchst genaue Positionierung des Flachdichtungsrings in bezug auf seine wichtigste Position, dem Innendurchmeser, gewährleistet wird. Die Positionierung erfolgt gegenüber dem mit dem Flanschadapter und Dichtungsfläche versehenen Formteil und nicht gegenüber einem Flansch 2.

Der in Figur 4 dargestellte Verbindungsbereich 14 des innerhalb von D2 liegenden Teils des Flachdichtungsringes mit der Lippe 10 ist beidseitig angefast, etwa mit 45 Grad; die daraus resultierende geringe Materialverbindung bildet eine Sollbruchstelle an welcher die Lippe 10 leicht abgetrennt werden kann.

Nach Abtrennung dieser nahezu einen Vollkreis umlaufenden Lippe 10 kann der Flachdichtungsring 1 für Verbindungen mit Formteilen mit grösseren Aussendurchmessern der Dichtfläche des Flanschadapters verwendet werden, etwa für Flanschverbindungen der ISO-Norm.

Hierbei dient wiederum eine Lippenstruktur, welche auf einem relativ kurzem Abschnitt eines Kreissegmentes mit grösserem Radius angeordnet ist. Beidseitig des Ansatzes 15 an dem Flachdichtungsring sind hier jeweils zwei kurze bogenförmige Lippenstücke 16 so angeordnet, dass diese beim Einbau des Flachdichtungsringes genau an der Aussenfläche des Bundes 4 eines ISO-Flanschadapters eines Formteils 3 anliegen und der Flachdichtungsring 1 so bezüglich seines Innendurchmessers mit demjenigen des anliegenden Formteils 3 positioniert wird.

Zusätzliches Abtrennen dieser aus den Stücken 16 gebildeten Lippenstruktur, etwa mittels eines Messers, erlaubt den Einsatz des Flachdichtungsringes als ganz gewöhnlichen Flachdichtungsring, welcher dann jedoch zentriert werden muss. Durch das im Ansatz 15 des Flachdichtungsrings 1 befindliche Langloch 18 kann der Flachdichtungsring 1 mittels eines Bolzens oder einer Schraube 6 des Flansches 2 in gewöhnlicher Weise gesichert werden, wodurch ein Herausfallen und dadurch Verschmutzen des Flachdichtungsringes 1 während der Montage verhindert wird. Das Langloch ist bezüglich seiner Längsachse radial angeordnet, wobei seine Länge so abgestimmt ist, dass Flanschverbindung sowohl der ANSI, ISO und JIS Norm verwendet werden können.

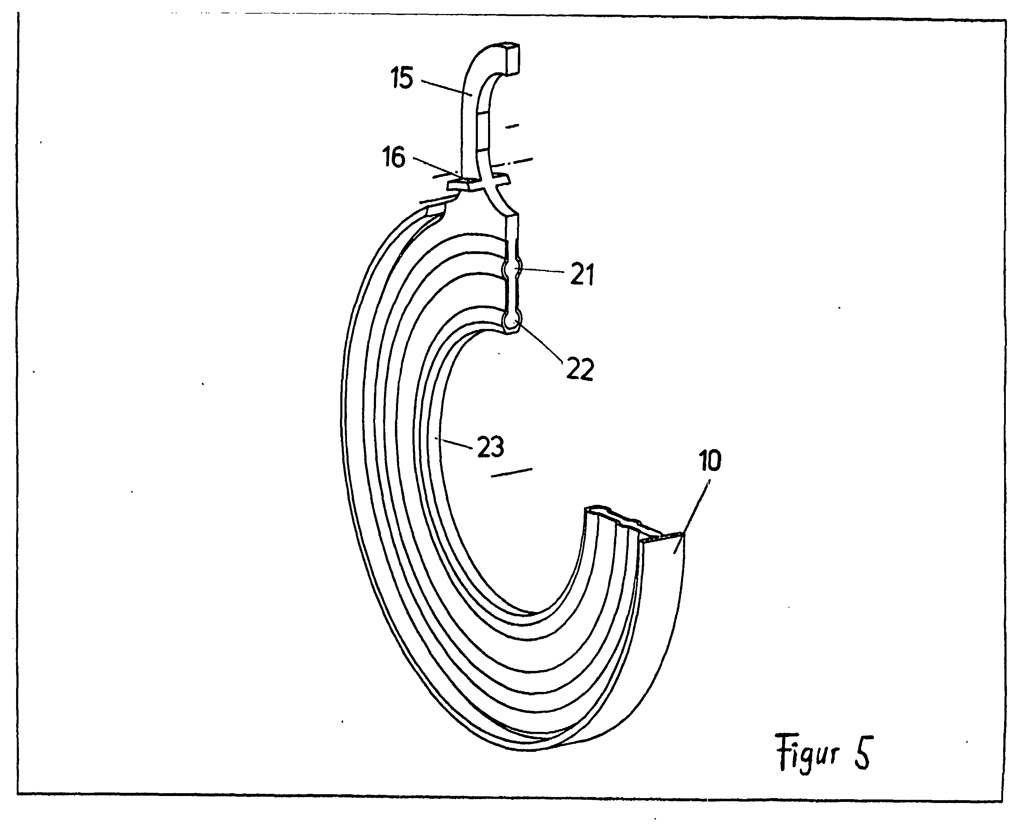

Figur 5 zeigt in einer perspektivischen Ansicht einen ¾ Schnitt des Flachdichtungsringes für den Einbau gemäss ANSI-Norm. Die Lippe 10 umfasst den Dichtungsring beidseitig vollumfänglich, mit Ausnahme des Bereiches des Ansatzes 15, an welchem die Lippenstücke 16 angebracht sind.

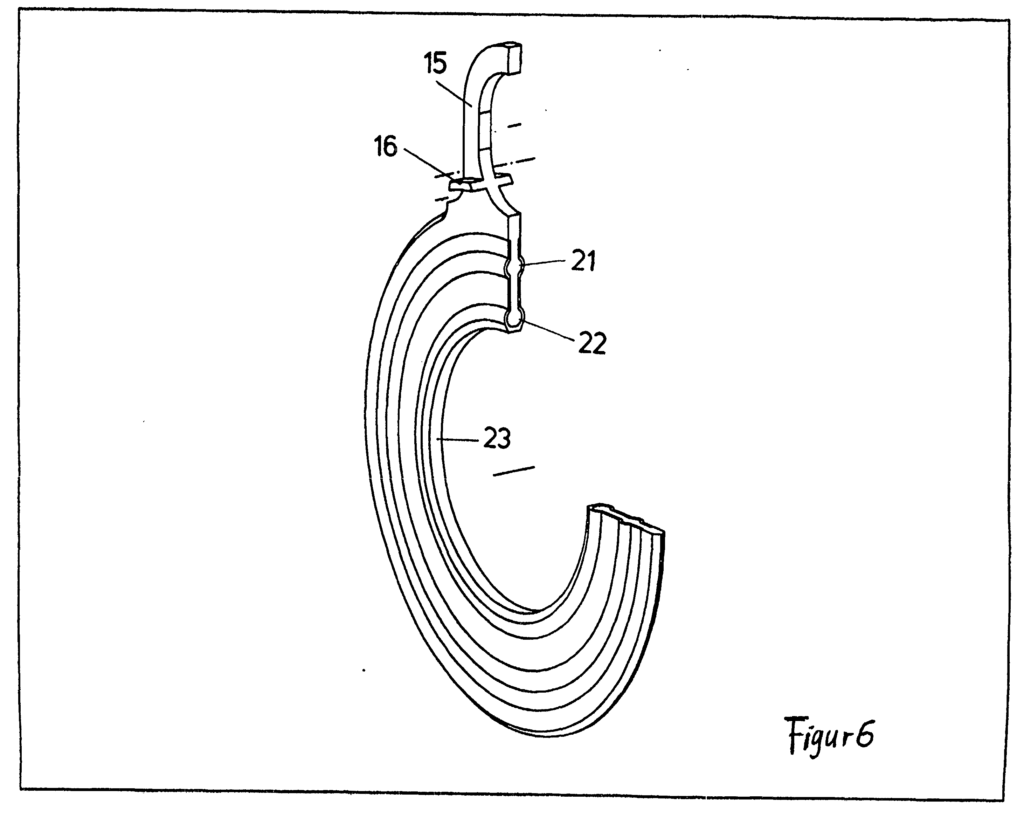

Figur 6 zeigt in einer perspektivischen Ansicht einen ¾ Schnitt des Flachdichtungsringes für den Einbau gemäss ISO-Norm. Die Lippe 10 aus Figur 5 ist abgetrennt und die Positionierung erfolgt durch die Lippenstücke 16, welche ebenfalls beidseitig des Dichtungsringes ausgebildet sind.

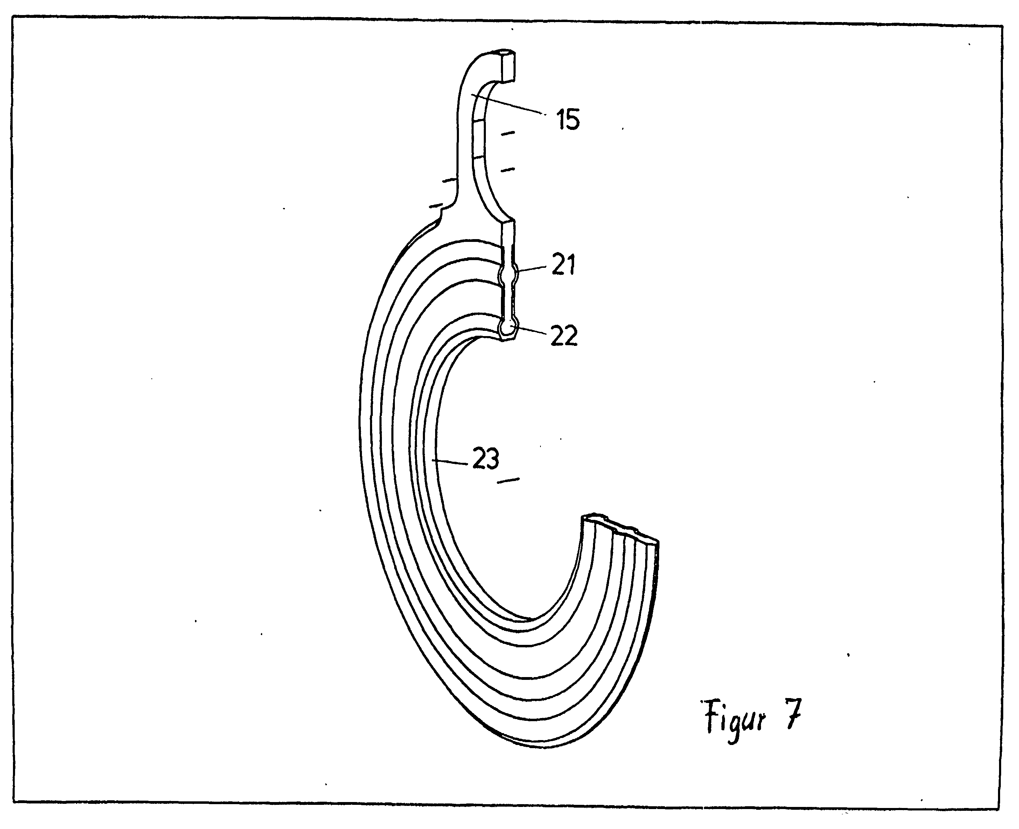

Figur 7 zeigt in einer perspektivischen Ansicht einen ¾ Schnitt des Flachdichtungsringes für den Einbau für die JIS oder sonstige Normen. Da sowohl die Lippe 10 als auch die Lippenstücke 16 entfernt sind entspricht der Dichtungsring weitgehend einem normalen Dichtungsring, welcher eine der Sicherungsmöglichkeit bei der Montage durch Langloch besitzt.

Der vorgeschlagene Flachdichtungsring kann aus verschiedenen Materialien gefertigt sein, vorzugsweise besteht er aus einem Elastomerkörper 19, welche während des Herstellungsprozesses im Bereich des inneren Durchmessers mit einem zweiten, PTFE-ähnlichen, Material 20 verbunden wird. Der Elastomer 19 besitzt eine vorbestimmte Festigkeit und Elastizität und gewährleistet sowohl bei normalen und auch bei höheren Temperaturen die mechanische Stabilität. Das PTFE-ähnliche Material 20 besitzt hohe chemische Widerstandsfähigkeit und glatte Oberflächen, es ist chemisch inert und zeigt wenig Ausgasung. Es bildet eine Barriere, welche den Einsatz des Flachdichtungsrings für hochreine Anwendungen erlaubt. Die Ummantelung des Elastomers 19 mit dem zweiten Material geschieht derart, dass keinerlei Materialüberfluss im Bereich, welcher mit durchfliessendem Medium in Berühung kommen kann, vorhanden ist.

Die Ausschnittsvergrösserung 8 zeigt den Querschnitt des Flachdichtungsrings im Bereich des Innenradius, für den Fall, dass keinerlei Anpresskräfte auf den Flachdichtungsring wirken. Der von PFTE-ähnlichen Material 20 gleichmässig umgebene Elastomerkern 19 besitzt zwei kreisförmige Auswülstungen 21 und 22. Die freie Auswülstung 22 schliesst mit einer ebenen Fläche 23 ab.

In Figur 9 wird nun der Flachdichtungsring aufgrund der Anpresskräfte der Schraubverbindung des Flansches zusammengedrückt, so führt dies zu einer Deformation der Auswülstungen 21 und 22, durch welche die ebene Fläche 23 radial nach innen gedrückt wird. Der ursprüngliche Durchmesser D1 ist so gewählt, dass durch diese Verkleinerung des Durchmessers die ebene Fläche 23 der freien Wulst 22 bündig mit der Innenfläche eines Formteils zum Abschluss gebracht wird. Die chemisch inerte Oberfläche der ebenen Fläche 23 ist der einzige Bereich des Flachdichtungsrings welcher mit einem zu transportieren Medium in Kontakt kommt. Die Breite D6 der ebenen Fläche 23 ist so gewählt, dass bei Aufbringung der richtigen Anpresskräfte der Flachdichtring bis auf diese Breite D6 zusammengedrückt wird.

Mit der beschriebenen Dichtungsscheibe wird eine vielseitige Anwendungsmöglichkeit auf einfachste Weise abgedeckt.

## Patentansprüche

1. Flachdichtungsring (1) für die Herstellung einer fluiddichten Verbindung von zwei gegeneinanderliegenden mit Flanschadaptern versehenen Formteilen (3,4), welche einem Innendurchmesser, durch welchen das zu transportierende Medium fliesst, und einem Aussendurchmesser aufweisen, wobei über die Formteile (3,4) Flansche (2) schiebbar und mittels Schrauben (6) miteinander verbindbar sind, um einen erforderlichen Anpressdruck auf die Dichtung zu erzeugen, wobei der Flachdichtungsring (1) im äusseren Umfangsbereich mindestens eine Lippenstruktur (10) aufweist, welche radial den Aussendurchmesser der Formteile (3,4) überragt und für eine im wesentlichen formschlüssige Umfassung der Formteile (3,4) ausgebildet ist, **dadurch gekennzeichnet, dass** die Lippenstruktur (10)zur Abtrennung vom Flachdichtungsring (1) eine Sollbruchstelle (14) aufweist.

2. Flachdichtungsring nach Anspruch 1 **dadurch gekennzeichnet, dass** ein Ansatz (15) vorgesehen ist, welcher radial den Aussendurchmesser der Formteile (3,4) bis über den Bereich der Schraubverbindung des Flanschringes (2) hinaus überragt.

3. Flachdichtungsring nach Anspruch 2 **dadurch gekennzeichnet, dass** der Ansatz (15) eine radial angeordnete langlochförmige Ausnehmung (18) aufweist, die dazu bestimmt ist, eine Schraube (6) oder eine Bolzen einer Flanschringverschraubung insbesondere der ISO, ANSI oder JIS Norm mindestens teilweise formschlüssig zu fassen.

4. Flachdichtungsring nach Anspruch 1 **dadurch gekennzeichnet, dass** die Lippenstruktur (10) nicht vollumfänglich auf einem Kreis mit Durchmesser D2 angeordnet ist, wobei der Durchmesser D2 insbesonder der ANSI-Norm für Aussendurchmesser von Flanschadaptern entspricht.

5. Flachdichtungsring nach Anspruch 1 und 4 **dadurch gekennzeichnet, dass** im Bereich des Ansatzes eine zweite kreisbogenförmige Lippenstruktur (16) auf einem Durchmesser D3 angeordnet ist, welcher grösser als Durchmesser D2 ist und insbesondere der ISO-Norm für Aussendurchmesser von Flanschadaptern entspricht.

6. Flachdichtungsring nach Anspruch 5 **dadurch gekennzeichnet, dass** die Lippenstruktur (16) aus zwei kreisbogenförmigen Lippenstücken besteht.

7. Flachdichtungsring nach Anspruch 1 bis 6 **dadurch gekennzeichnet dass** der Flachdichtungsring Mittel zum bündigen Einbau der Innenfläche des Flachdichtungringes in Relation zu den Innenflächen der zwei Formteile (3,4) umfasst.

8. Flachdichtungsring nach Anspruch 7 **dadurch gekennzeichnet, dass** die Mittel mindestens einen konzentrisch angeordneten ringförmige Wulst (22) umfassen, wobei die freie Innenseite (23) des inneren Wulstes (22) den Innendurchmesser des Flachdichtungsringes bildet und auf einer Länge D6, welche gleich der Solldicke des eingebauten Dichtungsringes ist, abgeflacht ausgebildet ist.

9. Flachdichtungsring nach den Ansprüche 1 bis 8 **dadurch gekennzeichnet, dass** der Flachdichtungsring aus einem Elastomer (19) gefertigt ist, welcher im inneren Umfangsbereich vollständig von einem PTFE ähnlichem Material (20) hoher chemischer Resistenz und mit glatter Oberfläche ummantelt ist.

## Revendications

1. Anneau d'étanchéité plat (1) pour la fabrication d'une connexion étanche aux fluides de deux pièces moulées (3, 4) opposées pourvues d'adaptateurs à brides, qui présentent un, diamètre intérieur, à travers lequel le milieu à transporter s'écoule, et un diamètre extérieur, les brides (2) pouvant être déplacées par-dessus les pièces moulées (3, 4) et pouvant être connectées l'une à l'autre au moyen de vis (6), afin de produire une pression de pressage nécessaire sur le joint, l'anneau d'étanchéité plat (1) présentant, dans la région périphérique extérieure, au moins une structure à lèvre (10) qui dépasse radialement au-delà du diamètre extérieur des pièces moulées (3, 4) et qui est réalisée pour englober essentiellement par engagement positif les pièces moulées (3, 4), **caractérisé en ce que** la structure à lèvre (10) présente un point de rupture (14) pour la séparation de l'anneau d'étanchéité plat (1).

2. Anneau d'étanchéité plat selon la revendication 1, **caractérisé en ce que** l'on prévoit une saillie (15) qui dépasse radialement au-delà du diamètre extérieur des pièces moulées (3, 4) jusqu'au-delà de la région de la connexion à vis de l'anneau de bride (2).

3. Anneau d'étanchéité plat selon la revendication 2, **caractérisé en ce que** la saillie (15) présente un évidement (18) en forme de trou oblong disposé radialement, qui est prévu pour recevoir une vis (6) ou un boulon d'un vissage de bague de bride, notamment conformément aux normes ISO, ANSI, ou JIS au moins partiellement par engagement positif.

4. Anneau d'étanchéité plat selon la revendication 1, **caractérisé en ce que** la structure à lèvre (10) n'est pas disposée sur toute la périphérie sur un cercle de diamètre D2, le diamètre D2 correspondant notamment à la norme ANSI pour le diamètre extérieur des adaptateurs à brides.

5. Anneau d'étanchéité plat selon la revendication 1 et 4, **caractérisé en ce que** dans la région de la saillie, on dispose une deuxième structure à lèvre (16) en forme d'arc de cercle, sur un diamètre D3 qui est supérieur au diamètre D2 et qui correspond notamment à la norme ISO pour le diamètre extérieur des adaptateurs à brides.

6. Anneau d'étanchéité plat selon la revendication 5, **caractérisé en ce que** la structure à lèvre (16) se compose de deux pièces de lèvre en forme d'arc de cercle.

7. Anneau d'étanchéité plat selon les revendications 1 à 6, **caractérisé en ce que** l'anneau d'étanchéité plat comprend des moyens pour l'insertion en affleurement de la face interne de l'anneau d'étanchéité plat par rapport aux faces internes des deux pièces moulées (3, 4).

8. Anneau d'étanchéité plat selon la revendication 7, **caractérisé en ce que** les moyens comprennent au moins un bourrelet (22) de forme annulaire disposé concentriquement, le côté interne libre (23) du bourrelet interne (22) formant le diamètre intérieur de l'anneau d'étanchéité plat et étant réalisé aplati sur une longueur D6 qui est égale à l'épaisseur de consigne de l'anneau d'étanchéité intégré.

9. Anneau d'étanchéité plat selon les revendications 1 à 8, **caractérisé en ce que** l'anneau d'étanchéité plat est fabriqué à partir d'un élastomère (19) qui est complètement enveloppé dans la région périphérique interne par un matériau similaire au PTFE (20) de grande résistance chimique et de surface lisse.

## Claims

1. Flat gasket ring (1) for producing a fluid-tight connection between two opposite mouldings (3, 4) which are provided with flange adapters and have an internal diameter, through which the medium which is to be transported flows, and an external diameter, it being possible for flanges (2) to be pushed over the mouldings (3, 4) and connected to one another by means of screws (6), in order to produce the necessary contact pressure on the gasket, **characterized in that**, Flat gasket ring (1) in the outer circumferential region, having at least one lip structure (10) which projects radially beyond the external diameter of the mouldings (3) and is designed for enclosing the mouldings (3) in an essentially positively locking manner, **characterized in that** the lip structure (10) has a predetermined breaking point (14) for severing it from Flat gasket ring (1).

2. Flat gasket ring according to Claim 1, **characterized in that** there is provided an extension (15) which projects radially beyond the external diameter of the mouldings (3, 4) to beyond the region of the screwed connection of the flange ring (2).

3. Flat gasket ring according to Claim 2, **characterized in that** the extension (15) has a radially arranged slot-like cutout (18) which is intended for accommodating, at least partially in a positively locking manner, a screw (6) or a bolt of a flange-ring screwed connection, in particular in accordance with the ISO, ANSI or JIS standards.

4. Flat gasket ring according to Claim 1, **characterized in that** the lip structure (10) is arranged, over most of its circumference, on a circle of diameter D2, the diameter D2 corresponding, in particular, to the ANSI standard for external diameters of flange adapters.

5. Flat gasket ring according to Claims 1 and 4, **characterized in that**, in the region of the extension, a second, circle-arc-shaped lip structure (16) is arranged on a diameter D3, which is greater than diameter D2 and corresponds, in particular, to the ISO standard for external diameters of flange adapters.

6. Flat gasket ring according to Claim 5, **characterized in that** the lip structure (16) comprises two circle-arc-shaped lip portions.

7. Flat gasket ring according to Claims 1 to 6, **characterized in that** Flat gasket ring comprises means for installing the inner surface of Flat gasket ring in a flush manner in relation to the inner surfaces of the two mouldings (3, 4).

8. Flat gasket ring according to Claim 7, **characterized in that** the means comprise at least one concentrically arranged annular bead (22), the free inside (23) of the inner bead (22) forming the internal diameter of Flat gasket ring and being of flattened design over a length D6, which is equal to the desired thickness of the installed gasket ring.

9. Flat gasket ring according to Claims 1 to 8, **characterized in that** Flat gasket ring is produced from an elastomer (19) which, in the inner circumferential region, is fully encased by a PTFE-like material (20) of high chemical resistance and with a smooth surface.
